# EUROPEAN PATENT APPLICATION

(11) **EP 1 796 201 A1**
(43) Date of publication of application: **13.06.2007**
(21) Application number: 06120160.4
(22) Date of filing: 06.09.2006
(51) Int. Cl.: H01M 14/00, H01M 16/00, H01M 10/40, H01M 10/46, H01M 10/50, H02J 7/35, H02J 7/00

(54) **Power source device for sensor nodes of ubiquitous sensor network**

(30) Priority: 10.03.2006 KR 20060022713; 08.12.2005 KR 20050120030
(71) Applicant: ELECTRONICS AND TELECOMMUNICATIONS RESEARCH INSTITUTE, Daejeon-shi (KR)
(72) Inventor: KIM, Kwang Man, Daejeon-city (KR); LEE, Young Gi, Daejeon-city (KR); RYU, Kwang Sun, Daejeon-city (KR); CHANG, Soon Ho, Daejeon-city (KR)
(74) Representative: Esslinger, Alexander

(57) **Abstract**

Provided is a power source device for sensor nodes of a ubiquitous sensor network (USN), including a solar cell having a self-powering function, a secondary battery storing electricity generated by the solar cell and supplying the electricity to the sensor nodes of the USN, and an interface circuit interfacing the solar cell with the secondary battery. The solar cell, the secondary battery, and the interface circuit are mounted on the sensor nodes.

## Description

### CROSS-REFERENCE TO RELATED PATENT APPLICATION

This application claims the benefit of Korean Patent Application Nos. 10-2005-0120030, filed on December 8, 2005 and 10-2006-0022713, filed on March 10 in the Korean Intellectual Property Office, the disclosures of which are incorporated herein in their entirety by reference.

### BACKGROUND OF THE INVENTION

### 1. Field of the Invention

The present invention relates to a ubiquitous sensor network (USN) system, and more particularly, to a power source device for sensor nodes of a USN, the power source being connected to the sensor nodes of the USN to supply power.

### 2. Description of the Related Art

USN systems refer to systems in which sensing functions are added to existing radio-frequency identification (RFID) systems providing simple identity information and a network is formed among the RFID systems so as to perform communications in real-time.

In more detail, the USN systems include a ubiquitous notion of adhering RFID tags or sensor nodes to all kinds of necessary objects, a sensing notion of sensing information about surroundings, for example, information about temperature, moisture, pollution, crevice, and the like, based on identified information about various objects using the sensor nodes, and a network notion of connecting the sensed information about the surroundings to a network in real time to manage the sensed information. Thus, the USN systems fundamentally give computing and communication functions to various objects and realize environments in which anything can be communicated, anytime and anywhere.

In prior art related to this field, Korean Patent No. 205229 discloses a solar cell power source device tracking a maximum power point of a solar cell to maintain a constant power voltage, and Korean Patent No. 229041 discloses an apparatus and method of using a solar cell power source device as a power source of a wireless communication terminal.

Also, Korean Patent Publication No. 2004-106909 discloses a circuit including a diode preventing a current charged from a solar cell from being reversed, and Korean Patent No. 465089 discloses a charging circuit including a buster circuit for improving charging efficiency and a charging battery or a secondary battery using a solar cell employing a protective circuit to prevent an overcharge.

In the above-mentioned prior arts, a silicon-based solar cell, a charging circuit converting electricity generated from the solar cell into electricity having appropriate current and voltage, a radio communication terminal storage battery storing the electricity of the charging circuit, a secondary battery, and similar devices are the main components.

A power source device having a complex structure, i.e., real and imaginary power of the solar cell and the secondary battery is mainly used for charging a mobile information communication terminal and has been developed in consideration of an electric capacity property requiring a high voltage, large capacity, high power, etc. and light, compact, and simple properties with the arrival of new IT society in which large capacity information is communicated at a high speed.

However, a conventional power source device having a complex structure has many problems concerning power source supply to sensor nodes of a USN in terms of size and power supply stability. Also, the complex power source device is considerably expensive.

### SUMMARY OF THE INVENTION

The present invention provides a power source device for sensor nodes of a USN, which supplies stable power, is relatively inexpensive, and is small enough to be installed in the sensor nodes of the USN.

According to an aspect of the present invention, there is provided a power source device for sensor nodes of a USN (ubiquitous sensor network), including: a solar cell having a self-powering function; a secondary battery storing electricity generated by the solar cell and supplying the electricity to the sensor nodes of the USN; and an interface circuit interfacing the solar cell with the secondary battery. The solar cell, the secondary battery, and the interface circuit are mounted on the sensor nodes.

According to an aspect of the present invention, the solar cell may be a dye-sensitized solar cell using a photosynthesis principle and have an open circuit voltage between 0.6V and 0.7V and a short circuit current density between 10 mA/cm² and 12 mA/cm², and a photoelectric conversion efficiency of 8% or more unit cell. The solar cell may be formed of several unit cells connected to one another so as to supply a voltage between 1.6V and 3.5V.

The secondary battery may one of be a lithium ion secondary battery, a lithium ion macromolecule secondary battery, and a lithium metal macromolecule secondary battery using lithium ions as carriers and have an operating voltage between 3.2V and 4.2V. The secondary battery may stably supply a voltage of 3V or less and a current of 1.0 mA to the sensor nodes through the interface circuit.

The interface circuit may include a booster circuit, a charging circuit, a reducing circuit, and a protective circuit interposed between the charging circuit and the secondary battery to prevent the secondary battery from being overcharged and overdischarged.

The power source device of the present invention may be used for at least 10 years and compact so as to be mounted on the sensor nodes, i.e., have a width of 30 mm x 30 mm or less and a thickness of 3mm or less.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of a power source device for sensor nodes of a ubiquitous sensor network (USN) according to an embodiment of the present invention; and
FIG. 2 is a block diagram of a controller circuit controlling components of an interface circuit of the power source device shown in FIG. 1.

### DETAILED DESCRIPTION OF THE INVENTION

Hereinafter, a solar cell and a secondary battery applied to a power source device of the present invention will be described.

Sensor nodes as core elements of a USN system refer to chips called smart dusts having a size of about 10 mm² or less and operating at a low power of about 100µm or less and may be used as a micro sensor, an optical receiver, an active and/or passive optical transmitter, a signal processor, a controlling circuit, or similar devices.

A power source device for driving the sensor nodes of the USN must stably supply a very low current for a long period of time and be subminiature in size. For this purpose, a subminiature complex power source system including a solar cell, a secondary battery, and an interface circuit and having a size of the order of millimeters unlike the above-mentioned conventional complex power source device has been devised.

The subminiature complex power source system must stably supply a low current, particularly, a low current of 1.0mA or less, and may be used for at least 10 years, as long as the environmental conditions of a position in which sensor nodes are scattered does not change.

In regard to the solar cell, the silicon-based solar cell used in the prior art is a kind of semiconductor junction solar cell and disadvantageous in terms of being bulky, inflexible and expensive. However, the power source device of the present invention does not use a semiconductor junction solar cell but instead uses a photo-electrochemical solar cell using a photosynthesis principle.

In other words, a dye-sensitized nanocrystalline solar cell created by the Swiss Grazel Research Group in 1991 has aroused much interest because of its high energy conversion efficiency second only to the energy conversion efficiency of an amorphous silicon solar cell and its low manufacturing unit cost. The present invention uses such a dye-sensitized solar cell to improve compactness, flexibility, and cost of power source devices for sensor nodes of a USN.

The secondary battery requires the conditions of high energy density, long life-span, being subminiature, having low weight, safety, familiarity with the environment, etc.

A lead (Pb) storage battery or a Ni-Cd battery used as an initial secondary battery has limitations in terms of the environment. A nickel-metal hydride (Ni-MH) battery does not satisfy the requirements of high energy density and high power density required for a high performance device. Thus, the power source device of the present invention uses a lithium secondary battery storing and converting energy by the movement of lithium ions to realize high energy density.

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art In the drawings, the thicknesses or sizes of elements are omitted or exaggerated for clarity. Like reference numerals in the drawings denote like elements.

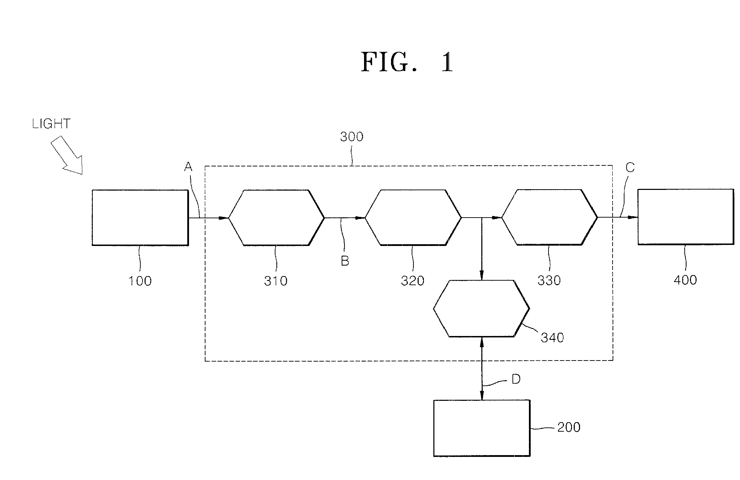

FIG. 1 is a block diagram of a power source device for sensor nodes of a USN according to an embodiment of the present invention. Referring to FIG. 1, the power source device includes a dye-sensitized solar cell 100, a lithium secondary battery 200, and an interface circuit 300 interfacing the dye-sensitized solar cell 100 with the lithium secondary battery 200. The power source device is mounted on a sensor node 400 to supply a power source to the sensor node 400 through an end terminal of the interface circuit 300.

The dye-sensitized solar cell 100 generally includes a photoelectrode formed by coating nanocrystalline titanium oxide (TiO₂) adsorbing ruthenium metal complex dyes on a transparent conductive layer, a counterpart electrode of the transparent conductive layer on which platinum is coated, and a mixture of a pair of oxidation-reduced iodine ions and a solvent, the mixture being interposed between the photoelectrode and the counterpart electrode. The dye-sensitized solar cell 100 generally shows photoelectric conversion efficiency of about 8% and may selectively show an open circuit voltage between 0.6V and 0.7V and short circuit current density between 10 mA/cm² and 12 mA/cm² per unit cell.

The dye-sensitized solar cell 100 may adjust a number of unit cells and arrangements of the unit cells to keep a voltage **A** produced by the dye-sensitized solar cell 100 within a range between 1.6V and 3.5V. In general, about five unit cells may be connected to one another in series or five or more unit cells may be connected to one another in series and in parallel to adjust an output voltage of a solar cell within the range between 1.6V and 3.5V.

A voltage is adjusted within such a range to minimize an increase in an electric resistance caused by a number of unit cells connected in series and the complexity of an arrangement method of the unit cells and thus smoothly increase a voltage in a booster circuit 310 of the interface circuit 300.

The dye-sensitized solar cell 100 may be inexpensively made more compact as described above.

The lithium secondary battery 200 is a system for achieving charging and discharging through insertion and disconnection of lithium ions using lithium ions as carriers. The lithium secondary battery 200 may be realized using a lithium ion secondary battery including a lithium transition metal oxide anode and a graphite cathode, a lithium ion macromolecule secondary battery in which an organic electrolyte solution is solidified, a lithium metal macromolecule secondary battery solidifying an organic electrolyte solution and using an anode formed of a lithium metal, or the like.

The lithium secondary battery 200 may be formed to have an operating voltage **D** within a range between 3.0V and 4.2V and be compact enough to have a size of several to several tens of millimeters so as to reduce the whole size of the power source device.

The interface circuit 300 includes the booster circuit 310, a charging circuit 320, a reducing circuit 330, and a protective circuit 340.

The booster circuit 310 boosts the voltage **A,** generated by the dye-sensitized solar cell 100, which is between 1.6V and 3.5V, to a voltage **B** of about 5V and outputs the voltage **B.** Because the lithium secondary battery 200 of the present invention has the operating voltage **D** within the range between 3.0V and 4.2V as described above, the voltage **A** is boosted to about 5V. In other words, the voltage must be maintained at the operating voltage **D** or more to enable charging with the lithium secondary battery 200.

The charging circuit 320 appropriately adjusts an output voltage of the booster circuit 310 to perform charging with the lithium secondary battery 200. The protective circuit 340 is connected between the charging circuit 320 and the lithium secondary battery 200 and prevents electric misuse such as overcharging and/or overdischarging of the lithium secondary battery 200 or overheating of the interior of the lithium secondary battery 200.

The reducing circuit 330 is installed before a terminal connected to the sensor node 400 in order to lower electricity **C** supplied to the sensor node 400 to an appropriate voltage and current. In other words, the electricity **C** supplied via the reducing circuit 330 is adjusted to a voltage of 3V or less as an appropriate operating voltage of the sensor node 400 and to a current of 1.0mA or less.

The interface circuit 300 according to the present embodiment may be interposed between a general solar cell and a secondary battery to be used as a solar cell charging circuit for the secondary battery. The interface circuit 300 may also include different types of components. However, the interface circuit 300 must be formed of a system capable of finally supplying the above-described appropriate voltage and current suitable for operating sensor nodes of a USN of the present invention.

The interface circuit 300 further requires a controller circuit controlling a flow of electricity required by the booster circuit 310, the charging circuit 320, the reducing circuit 330, and the protective circuit 340. Functions and structures of components of the controller circuit will now be described.

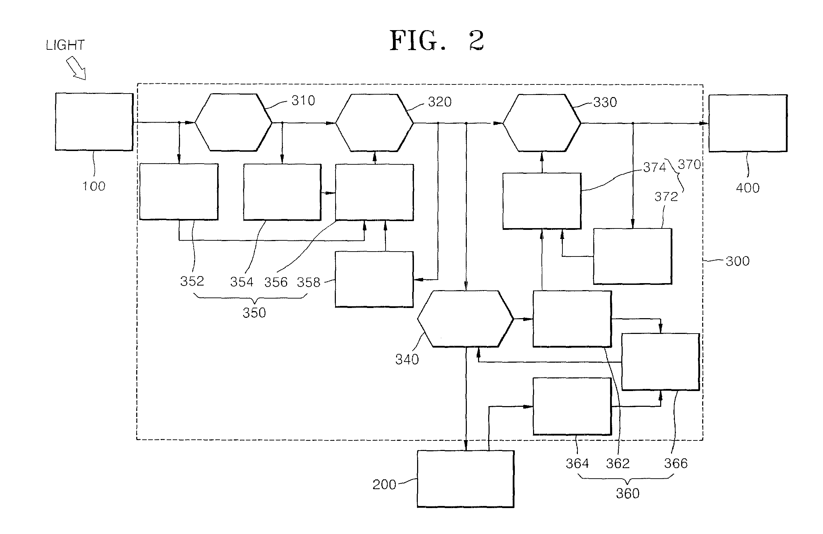

FIG. 2 is a detailed diagram of a controller circuit controlling components of the interface circuit 300 of the power source device shown in FIG. 1. Referring to FIG. 2, the controller circuit includes a charging circuit control unit 350, a protective circuit control unit 360, and a reducing circuit control unit 370.

The charging circuit control unit 350 includes a first voltage detector 352 detecting an output voltage of the dye-sensitized solar cell 100, a second voltage detector 354 detecting an output voltage of the booster circuit 310, a first current and/or voltage detector 358 detecting an output voltage and/or current of the charging circuit 320, and a first current and/or voltage adjuster 356 receiving outputs of the first voltage detector 352, the second voltage detector 354, and the first current and/or voltage detector 358 to adjust a voltage and/or current of the charging circuit 320. Here, the adjustment performed via the first current and/or voltage detector 358 corresponds to an adjustment performed using feedback.

The protective circuit control unit 360 includes a third voltage detector 362 detecting an output voltage of the protective circuit 340, a temperature detector 364 detecting a temperature of the lithium secondary battery 200, and a protective circuit controller 366 receiving outputs of the third voltage detector 362 and the temperature detector 364 to control the protective circuit 340. For example, in a case where the temperature of the lithium secondary battery 200 is high, the protective circuit controller 366 transmits a signal to the protective circuit 340 to intercept electricity being supplied to the lithium secondary battery 200 so as to protect the lithium secondary battery 200.

The reducing circuit control unit 370 includes a second current and/or voltage detector 372 detecting an output of the reducing circuit 330 and a second current and/or voltage adjuster 374 receiving outputs of the third voltage detector 362 and the second current and/or voltage detector 372 to adjust a current and/or voltage of the reducing circuit 330. Here, the adjustment is performed using feedback through the second current and/or voltage detector 372.

A control of an electric flow current through the controller circuit will now be described in brief. The charging circuit control unit 350 controls the first current and/or voltage adjuster 356 to transmit a signal to the charging circuit 320 so as to turn on and/or off the booster circuit 310 using information received from the first and second voltage detectors 352 and 354 and the first current and/or voltage adjuster 356, so that the booster circuit 310 outputs a constant voltage.

The charging circuit control unit 350 calculates a maximum output value of the dye-sensitized solar cell 100 to control the charging circuit 320 to charge the lithium secondary battery 200 with a constant optimal output using information of the first current and/or voltage detector 358.

The protective circuit control unit 360 controls the protective circuit 340 using state information of the lithium secondary battery 200 received from the third voltage detector 362 and temperature information received from the temperature detector 364 so that the lithium secondary battery 200 acts as a power source, i.e., charges, discharges, or intercepts electricity. In other words, the protective circuit control unit 360 performs functions of controlling charging, detecting the completion of charging, and protecting from damage caused by inappropriate charging.

After charging is completed and the output of the charging circuit 320 is intercepted, the protective circuit control unit 360 senses a current state of the lithium secondary battery 200 received from the third voltage detector 362 to re-charge the lithium secondary battery 200 that has been discharged according to the use of an output of the reducing circuit 330.

The reducing circuit control unit 370 controls the second current and/or voltage adjuster 374 to turn on and/or off the output of the reducing circuit 330 using the state information of the lithium secondary battery 200 received from the third voltage detector 362 and information received from the second current and/or voltage detector 372.

In conclusion, the controller circuit collectively controls all components of the interface circuit 300. Control units of the controller circuit may be installed within the circuits to be controlled, respectively, i.e., the charging circuit 320, the reducing circuit 330, and the protective circuit 340.

A power source device for sensor nodes of a USN according to the present embodiment is a subminiature power source system including a dye-sensitized solar cell flexibly made compact at a low cost, a lithium secondary battery of size of several to several tens of millimeters capable of realizing high energy density and high power density, and an interface circuit interposed between the dye-sensitized solar cell and the lithium secondary battery. The power source device can be mounted on a sensor node and continuously and stably supply low current driving electricity necessary for the sensor node. Also, the power source device can supply power for at least 10 years or more, i.e., for a long period of time, using the one-time adhesion to the sensor node.

As described above, a power source device for sensor nodes of a USN according to the present invention can include a self-powered dye-sensitized solar cell, a lithium secondary battery, and an interface circuit. Thus, the power source device can continuously store electricity generated from the self-powered dye-sensitized solar cell in the lithium secondary battery and continuously and stably supply a low current necessary for the sensor nodes forming a network.

In addition, the power source device of the present invention can be mounted on the sensor nodes to maintain a power source system of sensor nodes within a network area over a long period of time scattered one time.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A power source device for sensor nodes of a USN (ubiquitous sensor network), comprising:
a solar cell having a self-powering function;
a secondary battery storing electricity generated by the solar cell and supplying the electricity to the sensor nodes of the USN; and
an interface circuit interfacing the solar cell with the secondary battery,
wherein the solar cell, the secondary battery, and the interface circuit are mounted on the sensor nodes.

2. The power source device of claim 1, wherein the solar cell is a dye-sensitized solar cell using a photosynthesis principle.

3. The power source device of claim 2, wherein the dye-sensitized solar cell comprises:
a photoelectrode formed by coating nanocrystalline titanium oxide (TiO₂) adsorbing ruthenium metal complex dyes on a transparent conductive layer;
a counterpart electrode of the transparent conductive layer coated with platinum; and
a mixture of a pair of oxidation-reduced iodine ions and a solvent, the mixture being interposed between the photoelectrode and the counterpart electrode.

4. The power source device of claim 3, wherein the dye-sensitized solar cell has a photoelectric conversion efficiency of 8% or more, an open circuit voltage between 0.6V and 0.7V, and a short circuit current density between 10 mA/cm² and 12 mA/cm² unit cell.

5. The power source device of one of claims 1 to 4, wherein a voltage of the electricity supplied by the solar cell is within a range between 1.6V and 3.5V.

6. The power source device of one of claims 1 to 5, wherein the secondary battery supplies electricity to the sensor nodes through the interface circuit, and the electricity supplied to the sensor nodes has a voltage of 3V or less and a current of 1.0mA or less.

7. The power source device of one of claims 1 to 6, wherein the secondary battery is one of a lithium ion secondary battery, a lithium ion macromolecule secondary battery, and a lithium metal macromolecule secondary battery using lithium ions as carriers.

8. The power source device of one of claims 1 to 7, wherein the interface circuit comprises:
a booster circuit boosting the voltage of the electricity generated by the solar cell;
a charging circuit receiving a voltage output from the booster circuit to charge the secondary battery with the electricity at a constant voltage; and
a reducing circuit connected between the charging circuit and the secondary battery and lowering the voltage to be supplied to the sensor nodes.

9. The power source device of claim 8, wherein the interface circuit further comprises a protective circuit connected between the charging circuit and the secondary battery to prevent the secondary battery from being overcharged and overdischarged and outputting the electricity of the secondary battery to the reducing circuit.

10. The power source device of claim 9, wherein the interface circuit further comprises a controller circuit controlling an electric flow among the components.

11. The power source device of claim 10, wherein the controller circuit comprises:
a first voltage detector detecting a voltage of the solar cell;
a second voltage detector detecting a voltage of the booster circuit;
a first current and voltage adjuster receiving outputs of the first and second detectors to adjust a current and a voltage of the charging circuit;
a first current and voltage detector detecting the current and voltage of the charging circuit and outputting the current and voltage to the first current and voltage adjuster;
a third voltage detector detecting a voltage of the protective circuit;
a temperature detector detecting a temperature of the secondary battery;
a protective circuit controller receiving outputs of the third voltage detector and the temperature detector to prevent the voltage of the protective circuit from being increased or decreased;
a second current and voltage detector detecting a current and voltage of the reducing circuit; and
a second current and voltage adjuster receiving outputs of the third voltage detector and the second current and voltage detector to adjust the current and voltage of the reducing circuit.

12. The power source device of one of claims 8 to 11, wherein an operating voltage of the secondary battery is within a range between 3.0V and 4.2V.

13. The power source device of claim 12, wherein the voltage of the electricity supplied by the solar cell is within a range between 1.6V and 3.5V, the voltage boosted by the booster circuit is 5V or more, and the electricity supplied by the reducing circuit has a voltage of 3V or less and a current of 1.0mA or less.

14. The power source device of one of claims 1 to 13, wherein the power source device is used for at least 10 years.

15. The power source device of one of claims 1 to 14, wherein the power source device has a width of 30 mm x 30 mm or less and a thickness of 3mm or less.
